# EUROPÄISCHE PATENTANMELDUNG

(11) **EP 2 722 157 A1**
(43) Veröffentlichungstag der Anmeldung: **23.04.2014**
(21) Anmeldenummer: 12075119.3
(22) Anmeldetag: 18.10.2012
(51) Int. Cl.: B29C 63/34, F16L 55/165

(54) **Auskleidungsschlauch, rehabilitiertes Druckrohr und Verfahren zum Rehabilitieren eines Druckrohrs**

(71) Anmelder: Schwert, Siegfried, 14195 Berlin (DE); Odenwald, Ralf, 16727 Velten (DE)
(72) Erfinder: Schwert, Siegfried, 14195 Berlin (DE); Odenwald, Ralf, 16727 Velten (DE)
(74) Vertreter: Pfenning, Meinig & Partner GbR

(57) **Zusammenfassung**

Gegenstand der Erfindung ist ein Auskleidungsschlauch als Verbundschlauch zum Auskleiden eines zu sanierenden Druckrohres, umfassend zumindest eine erste Schicht (1) und eine an die erste Schicht (1) angrenzende zweite Schicht (2), wobei die erste Schicht (1) eine im wesentlichen fluiddichte und/oder gasdichte Diffusionssperre bildet und wobei die zweite Schicht (2) ein mit einem Harz getränktes textiles Flächengebilde ist und für eine vollflächige Klebeverbindung mit einer Innenwand des zu sanierenden Druckrohres eingerichtet ist, wobei der Auskleidungsschlauch in einem Zustand, in dem das Harz nicht ausgehärtet ist, flexibel ist. Dabei hat die zweite Schicht (2) eine Dicke von mindestens 3 mm, wobei das textile Flächengebilde und das Harz so gewählt sind, dass der Auskleidungsschlauch in einem Zustand, in dem das Harz ausgehärtet ist, ein selbsttragendes Rohr bildet. Die Erfindung betrifft außerdem ein Verfahren zum Rehabilitieren eines Druckrohrs unter Verwendung eines solchen Auskleidungsschlauchs und ein entsprechendes rehabilitiertes Druckrohr.

## Beschreibung

Gegenstand der vorliegenden Erfindung ist ein Auskleidungsschlauch zum Auskleiden eines zu sanierenden Druckrohres gemäß dem Oberbegriff des Hauptanspruchs, ein unter Verwendung eines solchen Auskleidungsschlauchs rehabilitiertes Druckrohr sowie ein Verfahren zum Rehabilitieren eines Druckrohrs unter Verwendung eines entsprechenden Auskleidungsschlauchs. Das Hauptanwendungsgebiet sind Druckleitungen, in denen ein Fluid, wie z.B. Erdgas oder Wasser, gegebenenfalls unter hohem Druck transportiert wird.

Es ist bekannt, beschichtete Schläuche zur Auskleidung und Sanierung eines Druckrohrs durch Reversieren oder Einziehen in das Altrohr einzubringen, wobei eine nach dem Einbringen außen liegende Oberfläche des Schlauches mit einer Innenwand des auszukleidenden Altrohrs verklebt wird. Ein derartiger Schlauch ist beispielsweise der WO 00/25057 A1 zu entnehmen. Derartige Schläuche sind in der Lage, Leckagen undicht gewordener Druckrohre zu beheben. Auf diese Weise sanierte Rohre können jedoch nur dann auch hohe Drücke aufnehmen, wenn das Altrohr selbst noch hinreichend hohe mechanische Belastungen aufzunehmen in der Lage ist und der Schlauch fest an der Innenseite des zu sanierenden Druckrohrs anliegt und somit mechanische Unterstützung durch das Altrohr erfährt. Aufgrund starker flächenmäßiger Korrosion oder anderweitiger Rohrschwächung kommt es jedoch vor, dass eine bestehende Rohrleitung den hohen Transportdrücken des Mediums sowie äußeren Lasten nicht mehr gewachsen ist. In diesen Fällen verbleibt bislang keine andere Möglichkeit, als innerhalb der zu sanierenden Druckrohrleitung ein neues selbsttragendes Rohr einzuziehen bzw. die gesamte Druckrohrleitung in offener Bauweise auszuwechseln, was im Normalfall einen beträchtlichen Mehraufwand mit sich bringt.

Aufgabe der vorliegenden Erfindung ist es, das vorgenannte Problem zu lösen und eine Maßnahme vorzuschlagen, die eine in ihren statischen Eigenschaften geschwächte Druckrohrleitung mit möglichst geringem Aufwand zu rehabilitieren erlaubt, auch wenn die Druckrohrleitung unter Umständen nicht gerade verläuft.

Diese Aufgabe wird gelöst mittels eines Auskleidungsschlauchs gemäß dem Hauptanspruch, sowie durch ein Druckrohr mit den Merkmalen des Anspruchs 13, welches mittels eines derartigen Auskleidungsschlauchs, der ein neues Rohr im Altrohr bildet, hergestellt wird und ein Verfahren zur Verwendung eines erfindungsgemäßen Auskleidungsschlauchs gemäß mit den Merkmalen des Anspruchs 14. Spezielle Ausführungsformen und Weiterbildungen ergeben sich mir den Merkmalen der Unteransprüche.

Der vorgeschlagene Auskleidungsschlauch zum Auskleiden eines zu sanierenden Druckrohres umfasst zumindest eine erste Schicht und eine an die erste Schicht angrenzende zweite Schicht, wobei die erste Schicht eine fluiddichte und/oder gasdichte Diffusionssperre bildet und wobei die zweite Schicht ein mit einem Harz getränktes textiles Flächengebilde ist und für eine fugenlose und vollflächige kraftschlüssige Klebeverbindung mit einer inneren Oberfläche des zu sanierenden Druckrohrs eingerichtet ist, wobei der Auskleidungsschlauch in einem Zustand, in dem das Harz nicht ausgehärtet ist, flexibel ist. Dabei hat die zweite Schicht eine Dicke von mindestens 3 mm, wobei das textile Flächengebilde und das Harz so gewählt sind, dass der Auskleidungsschlauch in einem Zustand, in dem das Harz ausgehärtet ist, ein selbsttragendes Rohr bildet, wobei die zweite Schicht als statisch wirksame Schicht dieses selbsttragenden Schlauchs fungiert.

Die Erfindung ermöglicht es, zu sanierende Druckrohre in besonders einfacher Weise mit einem selbsttragenden Rohr auszukleiden, wobei es unschädlich ist, wenn das zu sanierende Druckrohr Richtungsänderungen aufweist. Als Druckrohr seien dabei Rohrleitungen bezeichnet, die - anders als Freispiegelleitungen oder Gefälleleitungen - zum Transport von flüssigen oder gasförmigen Medien unter Druck ausgelegt sind und typischerweise mindestens zur in der DIN-Norm 16868-1 definierten Nenndruckklasse PN1 gehören. Da der Auskleidungsschlauch vor dem Aushärten des Harzes flexibel ist, kann es sich an die Kontur des zu sanierenden Druckrohres anpassen, wenn es in das zu sanierende Druckrohr eingebracht wird. Nach der anschließenden Aushärtung des Harzes bildet er in vorteilhafter Weise die Erzeugung ein selbsttragendes Rohr, so dass man ein saniertes Druckrohr erhält, das auch dann hinreichend stabil und mechanisch belastbar ist, wenn das alte Rohr, das nur noch als Form gedient hat, so geschwächt ist, dass es keine Belastungen mehr aufzunehmen in der Lage ist. Hierdurch vereinfacht sich die Sanierung insbesondere von stark geschwächten Altrohren, die dadurch mit sehr geringem Aufwand in hoher Qualität saniert und deren Lebensdauer so beträchtlich analog einer neuen Rohrleitung erhöht werden kann. Ein besonderer Vorteil ergibt sich dabei dadurch, dass in einem einzigen Arbeitsgang sowohl die mechanische Belastbarkeit wiederhergestellt werden kann als auch Leckagen behoben werden können. Die Sanierung in nur einem Arbeitsgang reduziert dabei nicht nur den für den Rehabilitationsprozess erforderlichen Aufwand, sondern erhöht auch die Ausführungsqualität, weil dabei keine übermäßigen Querschnittsverminderungen auftreten, die bei einer Sanierung in mehreren Arbeitsschritten, d.h. mittels zweier Schläuche in zwei Arbeitsgängen, kaum vermeidbar wären, insbesondere bei Richtungsänderungen.

Das textile Flächengebilde kann z.B. ein Gewebe oder ein Gewirke oder ein Gestrick oder ein Gelege - im letztgenannten Fall vorzugsweise ein Multiaxialgelege-sein oder eine Matte, die z.B. durch eine Kombination der genannten Materialarten gebildet sein kann. In jedem Fall ist es ein zumindest überwiegend aus Fasern gebildetes flächiges Material, das zusammen mit dem Harz nach dessen Aushärten einen faserverstärkten Kunststoff bildet, der dem selbsttragenden Rohr, das der Auskleidungsschlauch nach dem Aushärten bildet, die geforderten statischen Eigenschaften, also die erforderliche Steifigkeit, verleiht. Dabei kann das textile Flächengebilde z.B. aus Glasfasern oder Kohlefasern oder Fasern aus PES oder PET gebildet sein.

Für das Harz können ganz verschiedene Duroplaste verwendet werden. In Frage kommen insbesondere ungesättigte Polyesterharze, ungesättigte Vinylesterharze, Epoxidharze, Melanimharze, Phenolharze und Furanharze. Dabei kann das Harz styrolhaltig oder styrolfrei sein. Die Verwendung eines styrolfreien Harzes ist dabei aus Gründen des Umwelt- und Arbeitsschutzes vorteilhaft. Ein Harzanteil der aus dem Harz und dem textilen Flächengebilde gefertigten zweiten Schicht kann z.B. zwischen 30% und 70% betragen.

Durch eine bestimmungsgemäße Verwendung eines Auskleidungsschlauchs hier vorgeschlagener Art erhält man vergleichsweise einfach ein in vorteilhaft guter Qualität rehabilitiertes Druckrohr. Dabei umfasst das rehabilitierte Druckrohr ein Altrohr sowie ein innerhalb des Altrohrs angeordnetes und durch eine vollflächige Klebeverbindung mit einer Innenwand des Altrohrs verbundenes selbsttragendes Rohr, wobei das selbsttragende Rohr aus dem Auskleidungsschlauch, also einem Verbundschlauch, gebildet ist.

Mit der vorliegenden Erfindung wird dementsprechend auch ein Verfahren zum Rehabilitieren eines Druckrohrs unter Verwendung eines Auskleidungsschlauchs der hier beschriebenen Art vorgeschlagen. Dieses Verfahren umfasst das Einbringen des Auskleidungsschlauchs, der typischerweise bereits werkseitig mit dem Harz getränkt ist, in das Altrohr, was in einem einzigen Arbeitsschritt geschehen kann. Dann oder dabei wird eine Haftverbindung zwischen dem Auskleidungsschlauch und einer Innenwand des Altrohr hergestellt, was z.B. dadurch geschehen kann, dass der Auskleidungsschlauch aufgeblasen und dadurch zumindest quasi vollflächig mit der Innenwand des Altrohrs in Kontakt gebracht wird. Die Haftverbindung kann dabei durch Klebstoff einer optional vorgesehenen zusätzlichen Klebstoffschicht oder durch das Harz der zweiten Schicht selbst vermittelt werden. Schließlich sieht das Verfahren ein Aushärten des Harzes vor, so dass der Auskleidungsschlauch ein vollflächig klebend mit dem Altrohr verbundenes selbstragendes Rohr bildet. Die Klebeverbindung sei dabei auch dann noch als vollflächig bezeichnet, wenn der Auskleidungsschlauch an vergleichsweise wenigen Stellen, an denen das Druckrohr Richtungsänderungen aufweist, Falten wirft. Zumindest in geraden Abschnitten des Druckrohres liegt der Auskleidungsschlauch bzw. das daraus gebildete selbsttragende Rohr jedoch fugenlos am Altrohr an.

Das Einbringen des Aukleidungsschlauchs in das Altrohr kann z.B. durch Reversieren geschehen. Der Schlauch kann also durch Umstülpen bzw. Umkrempeln, beispielsweise mit Hilfe einer Drucktrommel, in das zu sanierende Druckrohr hinein reversiert werden, bevor das Harz aushärtet und der Auskleidungsschlauch das selbsttragendes Rohr bildet.

Das selbsttragende Rohr, das der Auskleidungsschlauch zu bilden geeignet ist, hat bei typischen Ausführungen des vorgeschlagenen Auskleidungsschlauchs eine in der DIN-Norm 16868-1 definierte Nennsteifigkeit von mindestens SN 630 oder eine Nominalsteifigkeit oder Ringsteifigkeit von mindestens 630 N/m². Dabei ist der Auskleidungsschlauch wohlgemerkt in der Lage, ein selbsttragendes Rohr dieser Steifigkeit auch ohne stützendes Altrohr zu bilden, also insbesondere unabhängig von irgendeiner verbleibenden tragenden Funktion des Altrohrs, die je nach Zustand des Altrohrs mehr oder weniger vorhanden und unter Umständen vernachlässigbar sein kann. Als selbsttragend sei im vorliegenden Zusammenhang ein Rohr also insbesondere dann bezeichnet, wenn es eine nominale Nennsteifigkeit oben angegebener Größe von mindestens 630 N/m² hat. Das aus dem Auskleidungsschlauch bildbare selbsttragende Rohr kann natürlich je nach Ausführung, insbesondere abhängig von der Wandstärke, unter Umständen auch eine deutlich größere Nennsteifigkeit von z.B. bis zu SN 10000 haben und bei Nenndrücken über 25 bar auch darüber hinausgehend.

Die Dicke der zweiten Schicht des Auskleidungsschlauchs kann dazu z.B. zwischen 3 mm und 20 mm oder zwischen 4 mm und 20 mm betragen. Auf diese Weise kann der Auskleidungsschlauch so ausgestaltet sein, dass das daraus gebildete selbsttragende Rohr nach dem Aushärten des Harzes auch ohne Unterstützung durch ein Altrohr je nach Auslegung Drücke von zumindest 0,5 bar oder 1 bar oder auch bis beispielsweise 25 bar oder bei entsprechender Wahl und Anordnung der Fasern und der statisch erforderlichen Schlauchdicke sogar 50 bar aufnehmen kann und dabei dicht bleibt. Das aus dem Auskleidungsschlauch gebildete selbsttragenden Rohr kann so Belastungen, wie sie beispielsweise durch Erdlasten, Grundwasser oder Verkehrslasten bzw. die innen am Druckrohr anliegenden Betriebsdrücke bzw. auch Unterdrücke (Vakuum)auftreten, aufnehmen, und zwar auch dann, wenn das Altrohr keine mechanische Unterstützung mehr leisten kann.

Der Auskleidungsschlauch kann so ausgeführt werden, dass die zur Bildung einer inneren Oberfläche des sanierten Druckrohres vorgesehene erste Schicht außerhalb der zweiten Schicht angeordnet ist, so dass der Auskleidungsschlauch zum Einbringen in das zu sanierende Druckrohr durch Reversieren geeignet ist. Andere Ausführungen sehen vor, dass die zur Bildung der inneren Oberfläche des sanierten Druckrohres vorgesehene erste Schicht innerhalb der zweiten Schicht angeordnet ist, so dass der Auskleidungsschlauch zum Einbringen in das zu sanierende Druckrohr durch Einziehen geeignet ist.

Das Harz kann z.B. so gewählt werden, dass es beim Tränken des textilen Flächengebildes eine Viskosität von zwischen 600 mPas und 25000 mPas aufweist. Bei einer solchen Viskosität kann das Harz einfach mit dem textilen Flächengebilde in Verbindung gebracht und gleichmäßig darin verteilt werden. Es kann vorteilhaft sein, wenn das Harz ein Eindickungsmittel enthält, so dass es nach dem Tränken des textilen Flächengebildes auf eine Viskosität von zwischen 100000 mPas und 500000 mPas eindickt. Als Eindickungsmittel kann ein anorganischer Stoff, wie z.B. Magnesiumoxid, verwendet werden. Eine zum Eindicken führende chemische Reaktion kann dabei durch Wärme beschleunigt werden. Durch das Eindicken des - dabei noch nicht aushärtenden - Harzes kann ein Verfließen innerhalb des textilen Flächengebildes oder ein Auslaufen aus der zweiten Schicht, z.B. aufgrund eines Gefälles, verhindert werden. Das erlaubt eine problemlose Lagerung und einen Transport des Auskleidungsschlauchs. Daher eignet sich der Auskleidungsschlauch in dieser Ausführung besonders gut für eine Vorbereitung fernab des Einsatzortes, so dass der Aufwand an der Baustelle selbst ausgesprochen gering gehalten werden kann. Insbesondere ist es nicht erforderlich, das textile Flächengebilde erst am eigentlichen Einsatzort mit dem Harz zu tränken. Eine Tränkung am Einsatzort kann aber unter bestimmten Umständen sinnvoll sein und sei daher nicht ausgeschlossen.

Es kann vorgesehen sein, dass auf einer der ersten Schicht abgewandten Oberfläche der zweiten Schicht eine Klebstoffschicht auf die zweite Schicht aufgetragen ist, wobei die Klebstoffschicht in einem ausgehärteten Zustand eine klebende Verbindung zwischen dem selbsttragenden Rohr und einer Innenseite des zu sanierenden Druckrohres zu vermitteln geeignet ist. Sofern der Auskleidungsschlauch durch Reversieren in das Altrohr eingebracht werden soll, kann die Klebstoffschicht hergestellt werden, indem Klebstoff in den Auskleidungsschlauch eingefüllt und auf der zunächst innen liegenden Oberfläche verteilt wird, beispielsweise, indem der Auskleidungsschlauch durch ein Walzenpaar mit definiertem Spalt gezogen wird. Zum Einfüllen des Klebstoffs kann es dabei unter Umständen erforderlich sein, aufeinanderliegende Lagen des Auskleidungsschlauchs auseinanderzuziehen oder den Auskleidungsschlauch hierfür aufzublasen. Als Klebstoff zur Bildung der Klebstoffschicht kommt z.B. Acrylharz oder ein Harz auf Basis von Silikonen oder Epoxiden und insbesondere das aus anderem Zusammenhang bekannte starline^{®}EXPRESS-Harz in Frage. Das Aufbringen der Klebstoffschicht kann unter Umständen erst am Einsatzort, also auf der Baustelle geschehen, auch wenn das Tränken der zweiten Schicht mit dem Harz und das Verbinden der ersten und der zweiten Schicht unter Umständen viel früher und vorzugsweise vor einem Transport zum Einsatzort erfolgt.

Bei anderen Ausführungen kann auch das Harz, mit dem das textile Flächengebilde der zweiten Schicht getränkt wird, selbst so gewählt sein, dass es im ausgehärteten Zustand eine klebende Verbindung zwischen dem selbsttragenden Rohr und einer Innenseite des zu sanierenden Druckrohres zu vermitteln geeignet ist. Zu diesem Zweck kann das Harz eine Mischung aus einem zur Bildung eines selbstragenden Rohrs geeigneten Harz und einem Klebstoff sein, wobei der Klebstoff z.B. ein Acrylharz oder ein Silikonharz oder ein Epoxidharz sein kann. Die Mischung kann dabei durch Mischen des erstgenannten Harzes und des Klebstoffs in flüssiger Form hergestellt werden oder z.B. durch Einrühren von Kügelchen, in denen der Klebstoff eingeschlossen ist und die beispielsweise Wachshüllen haben können. In diesem Fällen kann ein Teil des Harzes beim Sanieren des Altrohrs aus der zweiten Schicht nach außen austreten und somit beim Einbringen des Auskleidungsschlauchs das zu sanierende Druckrohr eine fugenlose kraftschlüssige und vollständige Verklebung mit dem zu sanierenden Druckrohr bewirken. In Abhängigkeit vom Material des zu sanierenden Druckrohres wird das Harz dann derart gewählt, dass es nicht nur das selbsttragende Rohr erzeugt, sondern auch eine klebende Verbindung zwischen dem selbsttragenden Rohr und dem zu sanierenden Druckrohr vermittelt. Durch das Verkleben mit dem zu sanierenden Druckrohr wird z.B. verhindert, dass Gashinterwanderungen zwischen dem selbsttragenden Rohr und dem zu sanierenden Druckrohr stattfinden können. Derartige Gashinterwanderungen können in Hohlräumen gleich welcher Art explosive Gemische bilden, was aus Gründen der Explosionssicherheit verhindert werden muss. Bei Trinkwasser könnten bei einer Nichtverklebung mit dem Altrohr z.B. im Bereich von Anbohrungen (für Hausanschlüsse) dann Krankheitskeime von außen (im Bereich kontaminierter Böden) in die Leitung eindringen, und zwar insbesondere in vorübergehend außer Betrieb befindliche Leitungen. Andererseits könnten wiederum Wasserverluste entstehen, die doch durch die Rehabilitation ausgeschlossen werden sollen.

Die erste Schicht, die die Diffusionssperre bildet und dem rehabilitierten Druckrohr die nötige Dichtigkeit verleihen können soll, kann insbesondere für das Harz undurchlässig sein oder eine für das Harz undurchlässige Lage umfassen. Dabei kann die erste Schicht auf verschiedene Weisen gebildet werden.

So kann die erste Schicht des mehrschichtigen Auskleidungsschlauchs z.B. ihrerseits ein Verbund sein, der eine diffusionsarme Folie sowie an einer der zweiten Schicht zugewandten Seite der Folie eine faserhaltige Lage umfasst. Die faserhaltige Lage kann wieder z.B. ein Gewebe oder ein Gewirke oder ein Gelege oder ein Gestrick sein. Wie das textile Flächengebilde der zweiten Schicht kann auch die faserhaltige Lage dabei z.B. aus Glasfasern oder Kohlefasern gebildet sein oder Glas- oder Kohlefasern enthalten. Eine Verbindung zwischen der faserhaltigen Lage und der Folie kann z.B. dadurch realisiert sein, dass die Folie auf die faserhaltige Lage aufextrudiert oder die Folie z.B durch Anschmelzen der Folie auf die faserhaltige Lage aufkaschiert ist. Im letztgenannten Fall kann die faserhaltige Lage durch einzelne Fasern gebildet werden, die in zufällig verteilten Orientierungen auf der Folie zu liegen kommen und ein Vlies bilden und dazu z.B. auf die oberflächlich angeschmolzene Folie gesaugt werden können.

Angaben dazu, wie die als eigentliche Diffusionssperre dienende Folie hergestellt werden kann und was für besondere Eigenschaften sie haben kann, sowie Details bezüglich der die Diffusionssperre tragenden faserhaltigen Lage können beispielsweise den Druckschriften WO 00/25057 A1 und WO 00/15992 A2 entnommen werden. Dort sind vergleichbare Diffusionssperren in einem anderen Zusammenhang beschrieben. Zur Bildung der ersten Schicht als Verbund beschriebener Art kann insbesondere der aus dem starline^{®}EXPRESS-Verfahrens bekannte Schlauch verwendet werden. In diesem Fall kann der Auskleidungsschlauch gebildet werden, indem der Schlauch aus dem starline^{®}EXPRESS-Verfahrens an einer der Diffusionssperre gegenüberliegenden Seite mit dem seierseits schlauchförmigen textilen Flächengebilde verbunden wird, das dann zusammen mit der faserhaltigen Lage des die erste Schicht bildenden Schlauchs mit dem Harz getränkt wird.

Die Ausführung der ersten Schicht als Verbund dieser Art Anordnung kann die Herstellung des Auskleidungsschlauchs und die Verbindung der ersten Schicht mit der zweiten Schicht erleichtern. Es sind aber auch Ausführungen möglich, bei denen die erste Schicht nur durch eine direkt mit der zweiten Schicht verbundene Folie gebildet wird.

Die erste Schicht kann durch das Harz mit der zweiten Schicht verbunden sein, mit dem die zweite Schicht getränkt ist. Dazu kann das Harz einen Teil der ersten Schicht, z.B. die genannte faserhaltige Lage der ersten Schicht, durchdringen.

Es ist günstig, wenn das Harz, mit dem das textile Flächengebilde getränkt ist, kein selbsthärtendes Harz ist, sondern chemisch oder elektromagnetisch aktiviert werden muss, um eine Aushärtung herbeizuführen. Auf diese Weise wird gewährleistet, dass der Auskleidungsschlauch lagerfähig ist und möglicherweise schon lange vor den eigentlichen Sanierungsarbeiten hergestellt werden kann - unter Umständen mit Ausnahme der eventuell erst am Einsatzort aufgebrachten Klebstoffschicht - und so zum Einsatzort transportiert werden kann, dass die Sanierung dort in einem einzigen Arbeitsgang geschehen kann. Insbesondere kann das Harz ein durch UV-Strahlung oder andere elektromagnetische Strahlung, insbesondere durch Licht im UV-nahen Bereich, härtbares Harz sein. So kann sichergestellt werden, dass das Aushärten erst innerhalb des zu sanierenden Druckrohres ausgelöst wird. Vorrichtungen zum Einbringen entsprechender aktivierender Strahlung in zu sanierende Druckrohre sind aus anderem Zusammenhang an sich bekannt. Es wird in der Regel genügen, eine UV-Lampe oder andere Strahlungsquelle durch den in das Altrohr eingebrachten Schlauch zu führen. Wenn nicht das Harz aus der zweiten Schicht, sondern eine zusätzliche Klebstoffschicht für die Verbindung des Auskleidungsschlauchs mit dem Altrohr vorgesehen ist, kann auch diese Klebstoffschicht durch die gleiche oder ähnliche Strahlung, also insbesondere z.B. durch UV-Strahlung aktivierbar sein. Durch diesen beschleunigten Aushärtungsprozess wird auch eine geringstmögliche Außerbetriebnahmezeit der Druckrohrleitung gewährleistet.

Nachfolgend werden Ausführungsbeispiele der Erfindung anhand der Figuren näher erläutert. Es zeigt
- Fig. 1: einen Querschnitt durch einen Auskleidungsschlauch,
- Fig. 1A: einen Längsschnitt durch diesen Auskleidungsschlauch an der in Fig. 1 mit A-A bezeichneten Stelle,
- Fig. 1B: eine Abwandlung des Aukleidungsschlauchs aus der Fig. 1 im Querschnitt,
- Fig. 2: einen Querschnitt durch einen Aukleidungsschlauch in einer anderen Ausführung,
- Fig. 2A: einen Längsschnitt durch den Auskleidungsschlauch aus Fig. 2 an der dort mit B-B bezeichneten Stelle,
- Fig. 3: einen Querschnitt durch ein rehabilitiertes Druckrohr, das unter Verwendung des Auskleidungsschlauchs aus Fig. 1 oder Fig. 1B saniert ist, und
- Fig. 3A: einen Längsschnitt durch das rehabilitierte Druckrohr aus Fig. 3 an der dort mit C-C bezeichneten Stelle.

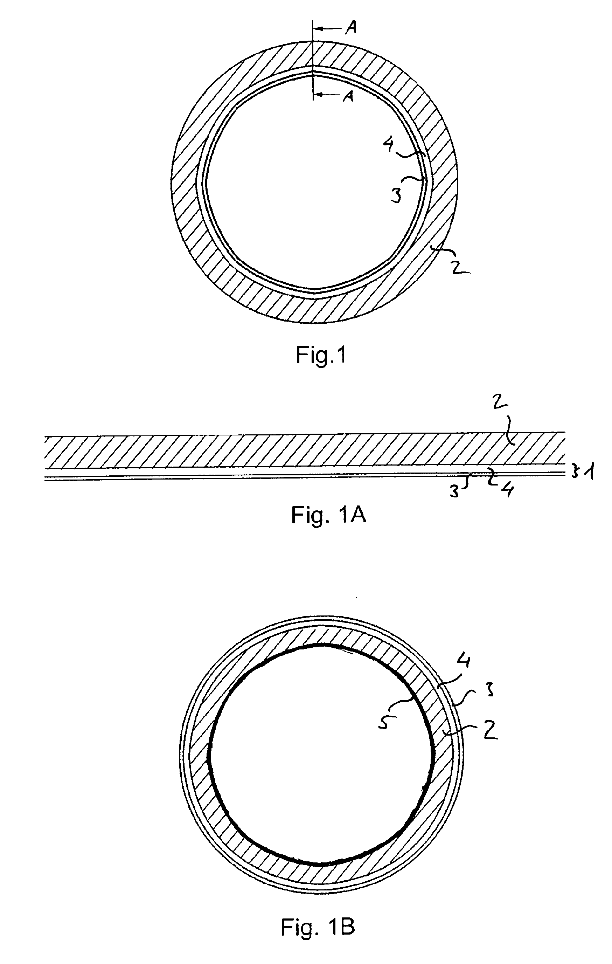

Der in den Figuren 1 und 1A gezeigte Auskleidungsschlauch aus Fig. 1 weist eine erste Schicht 1 und eine die erste Schicht 1 umgebende zweite Schicht 2 auf. Dabei ist die erste Schicht 1 des mehrschichtigen Auskleidungsschlauchs, die eine Diffusionssperre bildet, im vorliegenden Ausführungsbeispiel als zweilagiger Verbund ausgeführt mit einer diffusionsarmen Folie 3 und einer faserhaltigen Lage 4, die zwischen der Folie 3 und der zweiten Schicht 2 liegt.

Die zweite Schicht 2 ist durch ein mit einem Harz getränktes textiles Flächengebilde gegeben, wobei das Harz nicht selbsthärtend ist, sondern erst nach Aktivierung durch elektromagnetische Strahlung, vorzugsweise UV-Licht, aushärtet. Dabei ist die zweite Schicht 2 mit einer Wandstärke von z.B. 5 mm so dick und das Harz so beschaffen, dass der zunächst flexible Auskleidungschlauch nach dem Aushärten dieses Harzes ein selbsttragendes Rohr einer Nominalsteifigkeit von weit über 630 N/m² oder einer Nennsteifigkeit von weit über SN 630 bildet. Dabei bildet das Harz nicht nur zusammen mit dem textilen Flächengebilde einen faserverstärkten Kunststoff, sondern stellt auch eine Verbindung mit der ersten Schicht 1 her, deren faserhaltige Lage 4 ebenfalls von dem Harz durchdrungen ist. Bei dem textilen Flächengebilde kann es sich z.B. um ein Gewebe oder Gelege oder Gestrick oder Gewirke handeln, dass z.B. vollständig oder überwiegend aus Glasfasern oder Kohlefasern gebildet ist.

Als Harz, mit dem das textile Flächengebilde der zweiten Schicht 2 getränkt ist, kann ein ungesättigtes Polyesterharze, ein ungesättigtes Vinylesterharz, ein Epoxidharz, ein Melanimharz, ein Phenolharz oder ein Furanharz verwendet werden, und zwar je nach Ausführung als styrolhaltiges oder styrolfreies Harz. Dabei macht das Harz einen Gewichtsanteil von zwischen 30% und 70% der zweiten Schicht aus. Das Harz, das beim Tränken des textilen Flächengebildes eine Viskosität von größenordnungsmäßig 10000 mPas hat, kann dabei mit einem Eindickungsmittel wie beispielsweise Magnesiumoxid versehen sein, so dass es anschließend - noch vor dem Aktivieren des Harzes - bis zu einer Viskosität von etwa 200000 mPas eingedickt wird. In diesem Zustand ist der Auskleidungsschlauch nach wie vor flexibel und gut lagerbar und transportierbar.

Bei der faserhaltigen Lage 4 handelt es sich um einen Gewebeschlauch aus zumindest überwiegend aus Glasfasern oder Kohlefasern gebildeten Kett- und Schussfäden, auf den ein die Folie 3 bildendes Material aufextrudiert ist. Dabei kann die Folie 3, die eine Dicke von etwa 50 µm hat, z.B. aus PU - beispielsweise einem thermoplastischen Polyurethanelastomer - oder aus Polyamid gebildet sein. Andere mögliche Materialien für die diffusionsarme Folie 3 sind, Polyester, Polyethylen sowie Co-Polymere aus Ethylen oder α-Olefine. Anstelle des Gewebeschlauchs kann die faserhaltige Lage 4 bei einer Abwandlung auch einem Gelege oder Gestrick oder Gewirke gebildet sein. Eine spezielle Ausführung ergibt sich, wenn der aus dem starline^{®}EXPRESS-Verfahrens bekannte Schlauch als erste Schicht 1 verwendet wird. Eine spezielle Abwandlung des Auskleidungsschlauchs sieht vor, dass die erste Schicht 1 gebildet wird, indem die Folie 3 oberflächlich angeschmolzen wird und auf die faserhaltige Lage 4 aufkaschiert wird, die so eine Art Vlies auf der Folie 3 bilden. Die erste Schicht 1 wird dann also durch eine kaschierte Folie gebildet. Falls das genannte Harz nicht styrolfrei ist, fungiert die diffusionsarme Folie 3 insbesondere als Styrolsperre. In jedem Fall ist sie für das Harz undurchlässig.

Der Auskleidungsschlauch aus den Figuren 1 und 1A eignet sich zum Sanieren oder Rehabilitieren von Druckrohren, und zwar auch dann, wenn diese nicht nur undicht geworden sind, sondern aufgrund von Schwächungen, beispielsweise durch Korrosion, auch keine mechanische Belastung mehr aushalten können. Dazu wird der fertige Auskleidungsschlauch zu einer Baustelle transportiert, von der aus eine Öffnung des zu sanierenden Altrohrs zugänglich ist. Dort wird der Auskleidungsschlauch in das Altrohr, also in die ursprüngliche Druckrohrleitung, eingezogen und so aufgeblährt, dass eine vollflächige, fugenlose Haftverbindung zwischen dem Auskleidungsschlauch und dem Altrohr hergestellt wird.

Diese Haftverbindung kann beim vorliegenden Ausführungsbeispiel durch das oberflächlich aus der zweiten Schicht 2 austretende Harz vermittelt werden. Dazu kann das Harz unter Umständen als Mischung aus einem zur Bildung eines selbstragenden Rohrs geeigneten Harz und einem Klebstoff gebildet sein, wobei als Klebstoff z.B. ein Acrylharz oder ein Silikonharz oder ein Epoxidharz in Frage kommt und wobei der Klebstoff unter Umständen in Form von Kügelchen - eingeschlossen z.B. in Wachshüllen - im Harz vorliegen kann.

Anschließend wird eine Strahlungsquelle, z.B. eine Lichtquelle im UV- oder UV-nahen Bereich, durch den innerhalb des Altrohrs angeordneten Auskleidungsschlauch geführt, wodurch ein Aushärtungsprozess des Harzes ausgelöst wird. Der Auskleidungsschlauch bildet dadurch ein selbsttragendes Rohr oben genannte Steifigkeit, das sowohl zum Abdichten des Altrohrs dient als auch zur Wiederherstellung der Druckbelastbarkeit der Druckrohrleitung, die ursprünglich nur durch das Altrohr gebildet war. Unabhängig davon, wie belastbar das Altrohr noch war, kann die so sanierte Druckrohrleitung wieder Drücke von unter Umständen bis zu 25 bar oder sogar 50 bar aushalten.

In Fig. 1B ist eine Abwandlung des Auskleidungsschlauchs aus den Figuren 1 und 1A gezeigt. Wiederkehrende Merkmale sind hier und in den folgenden Figuren stets mit den gleichen Bezugszeichen versehen und werden nicht mehr eigens beschrieben. Der Auskleidungsschlauch aus Fig. 1B unterscheidet sich von dem vorherigen Ausführungsbeispiel nur durch eine zusätzliche Klebstoffschicht 5 sowie dadurch, dass die zweite Schicht 2, die faserhaltige Lage 4 der ersten Schicht 1 und die diffusionsarme Folie 3 der ersten Schicht in umgekehrter Reihenfolge angeordnet sind, so dass die Folie 3 außen liegt. In dieser Form eignet sich der Auskleidungsschlauch, der dazu hinreichend flexibel ist, zum Einbringen in das Altrohr durch Reversieren. Die Sanierung eines Altrohrs geschieht mit diesem Auskleidungsschlauch in gleicher Weise wie oben beschrieben mit dem einzigen Unterschied, dass der Auskleidungsschlauch durch Reversieren, z.B. mittels einer Drucktrommel, in das zu sanierendes Druckrohr eingebracht wird. Wie ein solcher Reversionsprozess durchgeführt werden kann, ist in anderem Zusammenhang z.B. in den Druckschriften WO 00/25057 A1 und WO 00/15992 A2 beschrieben.

Die Klebstoffschicht 5, die zunächst an einer inneren Oberfläche des Auskleidungsschlauchs gebildet wird, kommt beim Reversieren mit der inneren Oberfläche des Altrohrs in Kontakt und vermittelt dadurch die vollfächige Haftverbindung mit dem Altrohr. Zur Bildung der Klebstoffschicht 5 kann dabei z.B. Acrylharz oder ein Harz auf Basis von Silikonen oder Epoxiden und insbesondere der Klebstoff verwendet werden, mit dem bei dem bekannten starline^{®}EXPRESS-Verfahren eine Verbindung zwischen dem auskleidenden Schlauch und dem Altrohr hergestellt wird. Zur Bildung der Klebstoffschicht wird der Klebstoff in den Auskleidungsschlauch gefüllt und letzterer dann durch ein Walzenpaar gezogen, so dass der Klebstoff gleichmäßig verteilt wird, bevor der Auskleidungschlauch in das Altrohr reversiert wird. Wenn das Harz, mit dem das textile Flächengebilde getränkt ist, hinreichend gute Klebeeigenschaften hat, kann unter Umständen auch auf die Klebstoffschicht 5 verzichtet werden. Das gilt z.B., wenn für das Harz eine Mischung der oben im Zusammenhang mit den Figuren 1 und 1A beschriebenen Art verwendet wird.

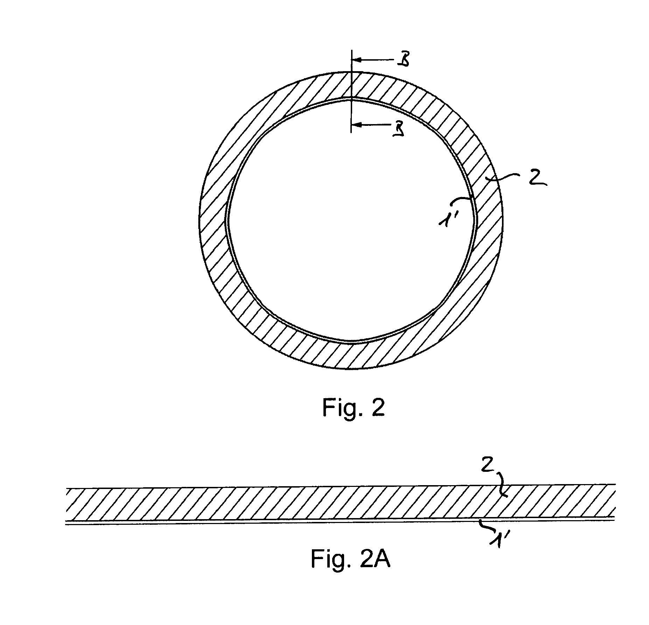

In den Figuren 2 und 2A ist eine Abwandlung der bislang beschriebenen Auskleidungschläuche gezeigt, die sich von den vorherigen Ausführungsbeispielen nur dadurch unterscheidet, dass die erste Schicht 1' hier lediglich durch eine als Diffusionssperre dienende Folie gebildet und direkt mit der zweiten Schicht 2 verbunden ist. Auch in diesem Fall kann die Verbindung zwischen der ersten Schicht 1' und der zweiten Schicht 2 durch das Harz vermittelt sein, mit dem das textile Flächengebilde der zweiten Schicht 2 getränkt ist. Auch dieser Auskleidungsschlauch kann alternativ linksherum gewendet ausgeführt werden und dann, wie der Auskleidungsschlauch aus Fig. 2B, statt durch Einziehen durch Reversieren in das zu sanierende Altrohr eingebracht werden.

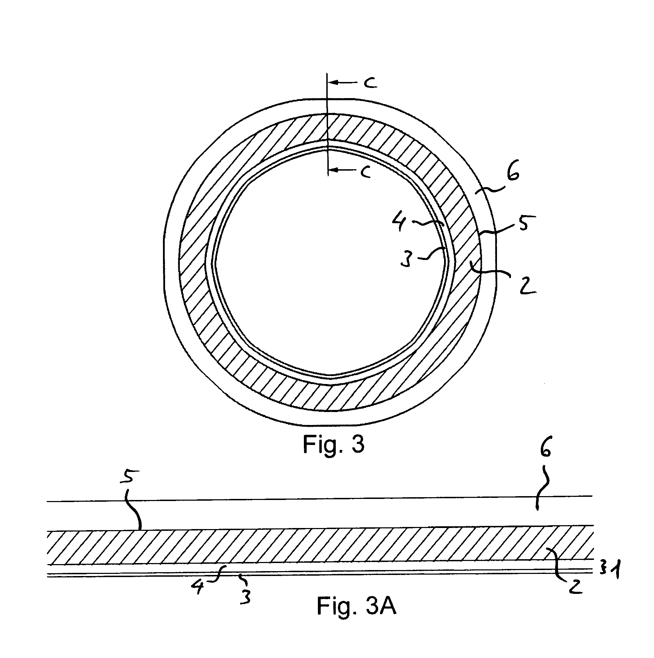

In den Figuren 3 und 3A ist ein rehabilitiertes Druckrohr gezeigt, dass sich durch das beschriebene Verfahren zum Rehabilitieren oder Sanieren eines Altrohrs 6 ergibt. Innerhalb des Altrohrs 6, das nur noch zur Formgebung benötigt wird und keine mechanischen Belastungen aushalten können muss, ist hier das selbsttragende Rohr angeordnet, dass der Auskleidungsschlauch aus den Figuren 1 und 1A oder aus Fig. 1B nach dem Aushärten des Harzes bildet. Dabei ist das genannte selbsttragende Rohr, in dem die zweite Schicht 2 als statisch wirksame Schicht fungiert, durch den Klebstoff der Klebstoffschicht 5 oder durch Teile des Harzes aus der zweiten Schicht 2 vollflächig und fugenlos mit der inneren Oberfläche des Altrohrs 6 verbunden. Zwischen der inneren Oberfläche des Altrohrs 6 und der zweiten Schicht 2 besteht also eine lückenlose kraftschlüssige Klebeverbindung, wodurch Gashinterwanderungen des durch den Auskleidungsschlauch gebildeten selbsttragenden Rohrs verhindert werden. Das Altrohr 6 kann einen Rohrdurchmesser von zwischen 100 mm und 2000 mm haben, vorzugsweise einen Durchmesser von zwischen 200 mm und 1200 mm. Dabei lässt sich das beschriebene Sanierungsverfahren durch Einbringen des Auskleidungschlauchs in einem einzigen Arbeitsschritt auch dann durchführen, wenn das Altrohr und dementsprechend dann auch das rehabilitierte Druckrohr Richtungsänderungen aufweist, und zwar vorteilhafter Weise in geschlossener Bauweise, d.h., es werden nur wenige Reinigungsujd Reversionsbaugruben benötigt.

## Patentansprüche

1. Auskleidungsschlauch zum Auskleiden eines zu sanierenden Druckrohres, umfassend zumindest eine erste Schicht (1) und eine an die erste Schicht (1) angrenzende zweite Schicht (2), wobei die erste Schicht (1) eine fluiddichte und/oder gasdichte Diffusionssperre bildet und wobei die zweite Schicht (2) ein mit einem Harz getränktes textiles Flächengebilde ist und für eine fugenlose und vollflächige kraftschlüssige Klebeverbindung mit einer Innenwand des zu sanierenden Druckrohrs eingerichtet ist, wobei der Auskleidungsschlauch in einem Zustand, in dem das Harz nicht ausgehärtet ist, flexibel ist,
**dadurch gekennzeichnet,**
**dass** die zweite Schicht (2) eine Dicke von mindestens 3 mm hat, wobei das textile Flächengebilde und das Harz so gewählt sind, dass der Auskleidungsschlauch in einem Zustand, in dem das Harz ausgehärtet ist, ein selbsttragendes Rohr bildet.

2. Auskleidungsschlauch nach Anspruch 1, **dadurch gekennzeichnet, dass** das selbsttragende Rohr, das der Auskleidungsschlauch zu bilden geeignet ist, eine Nennsteifigkeit von mindestens SN 630 oder eine Nominalsteifigkeit von mindestens 630 N/m² hat.

3. Auskleidungsschlauch nach einem der Ansprüche 1 oder 2, **dadurch gekennzeichnet, dass** die zur Bildung einer inneren Oberfläche des sanierten Druckrohres vorgesehene erste Schicht (1) außerhalb der zweiten Schicht (2) angeordnet ist, so dass der Auskleidungsschlauch zum Einbringen in das zu sanierende Druckrohr durch Reversieren geeignet ist.

4. Auskleidungsschlauch nach einem der Ansprüche 1 oder 2, **dadurch gekennzeichnet, dass** die zur Bildung einer inneren Oberfläche des sanierten Druckrohres vorgesehene erste Schicht (1) innerhalb der zweiten Schicht (2) angeordnet ist, so dass der Auskleidungsschlauch zum Einbringen in das zu sanierende Druckrohr durch Einziehen geeignet ist.

5. Auskleidungsschlauch nach einem der Ansprüche 1 bis 4, **dadurch gekennzeichnet, dass** das Harz derart gewählt ist, dass es beim Tränken des textilen Flächengebildes eine Viskosität von zwischen 600 mPas und 25000 mPas aufweist.

6. Auskleidungsschlauch nach einem der Ansprüche 1 bis 5, **dadurch gekennzeichnet, dass** das Harz ein Eindickungsmittel enthält, so dass es nach dem Tränken des textilen Flächengebildes auf eine Viskosität von zwischen 100000 mPas und 500000 mPas eingedickt ist.

7. Auskleidungsschlauch nach einem der Ansprüche 1 bis 6, **dadurch gekennzeichnet, dass** auf einer der ersten Schicht (1) abgewandten Oberfläche der zweiten Schicht (2) eine Klebstoffschicht (5) auf die zweite Schicht (2) aufgetragen ist, wobei die Klebstoffschicht (5) in einem ausgehärteten Zustand eine klebende Verbindung zwischen dem selbsttragenden Rohr und einer Innenseite des zu sanierenden Druckrohres zu vermitteln geeignet ist.

8. Auskleidungsschlauch nach einem der Ansprüche 1 bis 6, **dadurch gekennzeichnet, dass** das Harz so gewählt ist, dass es im ausgehärteten Zustand eine klebende Verbindung zwischen dem selbsttragenden Rohr und einer Innenseite des zu sanierenden Druckrohres zu vermitteln geeignet ist.

9. Auskleidungsschlauch nach einem der Ansprüche 1 bis 8, **dadurch gekennzeichnet, dass** die erste Schicht (1) für das Harz undurchlässig ist oder eine für das Harz undurchlässige Lage umfasst.

10. Auskleidungsschlauch nach einem der Ansprüche 1 bis 9, **dadurch gekennzeichnet, dass** die erste Schicht (1) durch einen Verbund gebildet ist, der eine diffusionsarme Folie (3) sowie an einer der zweiten Schicht (2) zugewandten Seite der Folie (3) eine faserhaltige Lage (4) umfasst.

11. Auskleidungsschlauch nach einem der Ansprüche 1 bis 10, **dadurch gekennzeichnet, dass** die erste Schicht (1) durch das Harz mit der zweiten Schicht (2) verbunden ist.

12. Auskleidungsschichtanordnung nach einem der Ansprüche 1 bis 11, **dadurch gekennzeichnet, dass** das Harz ein durch UV-Strahlung oder andere elektromagnetische Strahlung härtbares Harz ist.

13. Rehabilitiertes Druckrohr, umfassend ein Altrohr (6) sowie ein innerhalb des Altrohrs (6) angeordnetes und durch eine vollflächige Klebeverbindung mit einer Innenwand des Altrohrs (6) verbundenes selbsttragendes Rohr, wobei das selbsttragende Rohr aus einem Auskleidungsschlauch nach einem der Ansprüche 1 bis 12 gebildet ist.

14. Verfahren zum Rehabilitieren eines Druckrohrs unter Verwendung eines Auskleidungsschlauchs nach einem der Ansprüche 1 bis 12, wobei das Verfahren folgende Schritte umfasst:
- Einbringen des Auskleidungsschlauchs in ein Altrohr (6) in einem einzigen Arbeitsgang,
- Herstellen einer Haftverbindung zwischen dem Auskleidungsschlauch und einer Innenwand des Altrohrs (6),
- Aushärten des Harzes, so dass der Auskleidungsschlauch ein vollflächig klebend mit dem Altrohr (6) verbundenes selbstragendes Rohr bildet.
